# EUROPEAN PATENT APPLICATION

(11) **EP 2 366 534 A2**
(43) Date of publication of application: **21.09.2011**
(21) Application number: 11157852.2
(22) Date of filing: 11.03.2011
(51) Int. Cl.: B29D 11/00

(54) **Die, molding method and lens array**

(30) Priority: 19.03.2010 JP 2010065240
(71) Applicant: Fujifilm Corporation, Minato-ku Tokyo (JP)
(72) Inventor: Watanabe, Seiichi, Saitama (JP)
(74) Representative: HOFFMANN EITLE

(57) **Abstract**

A die for use in molding, from a molding material, a lens array including a substrate part (1) and a plurality of lens parts (10) arranged in the substrate part, includes: a die member (102,104) having a die face to be brought into contact with the molding material. The die member includes: a plurality of lens transferring parts (102a,104a) provided on the die face for transferring shapes of the lens parts; and a releasing part (103) formed in at least a part of the die face excluding the lens transferring parts. And, the releasing part includes an inclined face (103b).

## Description

### BACKGROUND

### 1. Technical Field

The present invention relates to a die, a molding method and a lens array.

### 2. Related Art

Recently, a portable terminal of electronic equipment such as a cellular phone and a PDA (Personal Digital Assistant) includes a compact and thin imaging unit. Such an imaging unit is generally equipped with a solid state imaging device such as a CCD (Charge Coupled Device) image sensor or a CMOS (Complementary Metal-Oxide Semiconductor) image sensor and a lens for forming an object image on the solid state imaging device.

In accordance with reduction in size and thickness of the portable terminal, the imaging unit is also required of reduction in size and thickness. Furthermore, in order to reduce the cost of the portable terminal, there is a demand for efficiency improvement in the fabrication process for the portable terminal. As a method for fabricating a large number of compact lenses, in known mass production of lens modules, a lens array, that is, an optical molding including a plurality of lenses formed on a substrate part, is fabricated and the plural lenses are separated from one another by cutting the substrate part.

Alternatively, in known mass production of imaging units, a substrate part including a plurality of lens parts and a semiconductor wafer including a plurality of solid state imaging devices are integrally combined with one another and the semiconductor wafer is cut together with the substrate part so that each lens part and each solid state imaging device may be provided as a set.

A lens array is fabricated, for example, through procedures described below. An example of the fabrication method is described in Patent Document 1 (WO-A-2008/0153102) mentioned below.
(1) With a resin applied on a wafer, the shape of one transfer body (a die) is transferred onto the resin.
(2) The process for transferring the shape of the die is repeated by 1500 through 2400 times, so as to form a master lens array having 1500 through 2400 lens shapes on one wafer.
(3) Metal ions of Ni or the like are deposited on the lens face of the master lens array through electrocasting, so as to obtain a stamper (a Ni electrocasting die).
(4) The thus obtained stamper is used as each of a pair of die members, and a thermosetting or photo-setting resin is supplied as a molding material to a lower die member of the pair of die members.
(5) The molding material supplied to the lower die member is pressed by an upper die member, so as to deform the resin in accordance with the die faces of the upper and lower die members.
(6) The resin sandwiched between the upper die member and the lower die member is cured through exposure to light or heat.
(7) The resin thus molded through the curing is released from the upper die member and the lower die member, so as to give a lens array.

### SUMMARY

In the case where a lens array including a large number of (several hundreds through several thousands) lens parts formed on a substrate with a size of several through ten inches is molded as described in Patent Document 1, a contact area between the die faces of upper and lower die members and a molding is large because the lens array is in a flat shape. Furthermore, since a vacuum is formed between the die faces and the surfaces of the molded lens array, a large resistance force is caused in releasing the die. Therefore, as compared with conventional fabrication where individual lenses are respectively molded, the lens array is adhered onto the die faces of the die members and is difficult to release. Furthermore, if an external force is applied for releasing the lens array, it is apprehended that the lens array may have a fault such as bent or distortion or may be damaged.

Each of Patent Document 2 (JP-A-2008-307735) and Patent Document 3 (JP-A-2003-222706) discloses a structure in which a die for resin molding is provided with a die face, to be in contact with a resin in the molding, having an inclined portion, and Patent Document 3 discloses that the inclined portion is used as a starting point for releasing the die. Neither Patent Document 2 nor Patent Document 3, however, describes release of a die in molding a lens array.

In order to solve the problem discussed above, the present invention provides a die, a molding method and a lens array in which a molded lens array may be easily released without damage.

According to an aspect of the present invention, a die for use in molding, from a molding material, a lens array including a substrate part and a plurality of lens parts arranged in the substrate part, includes: a die member having a die face to be brought into contact with the molding material. The die member includes: a plurality of lens transferring parts provided on the die face for transferring shapes of the lens parts; and a releasing part formed in an least a part of the die face excluding the lens transferring parts. And, the releasing part includes an inclined face.

According to another aspect of the present invention, a molding method for molding, from a molding material, a lens array including a substrate part and a plurality of lens parts arranged in the substrate part, includes: performing molding by pressing a die face having lens transferring parts for transferring shapes of the lens parts against the molding material; curing the molding material; and releasing the lens array from the die member by causing detachment between the lens array and the die member on an inclined face formed in a releasing part formed in at least a part of the die face excluding the lens transferring parts.

According to any one of aspects of the present invention, a gap is caused between a lens array and a die face on an inclined face of a releasing part due to expansion and contraction of the lens array caused in curing the lens array. The gap between the lens array and the die member thus caused in the releasing part appropriately extends to the other portion between the lens array and the die face, so as to largely reduce a force resistant to the release between the lens array and the die face, and as a result, the lens array may be released from the die member. Accordingly, the lens array may be released without externally applying a force, and hence, no fault such as distortion is caused in the lens array.

Therefore, according to the present invention, a die, a molding method and a lens array in which a molded lens array may be easily released without damage.

### BRIEF DESCRIPTION OF THE DRAWINGS

FIG. 1 is a cross-sectional view of a lens array.
FIG. 2 is a cross-sectional view of an exemplary lens module.
FIG. 3 is a cross-sectional view of an exemplary imaging unit.
Fig 4 is a cross-sectional perspective view of a part of a lens array.
FIG. 5 is an enlarged cross-sectional view of a part of the lens array.
FIG. 6 is a cross-sectional view of a die.
FIG. 7 is a cross-sectional view illustrating molding performed by using the die of FIG. 6.
FIG. 8 is a cross-sectional view illustrating release of the lens array.
FIG. 9 is an enlarged view of a principal part of FIG. 8.
FIG. 10 is a cross-sectional view of a die.
FIGS. 11A, 11B and 11C are cross-sectional views illustrating procedures in molding performed by using the die of FIG. 10.
FIG. 12 is a plan view of a die with another structure.
FIG. 13 is a perspective view of a cross-section of the die of FIG. 12 taken from a direction of an arrow of FIG. 12.
FIG. 14 is a perspective view of a releasing part of the die of FIG. 12.
FIG. 15 is a diagram illustrating a modification of the lens array.

### DETAILED DESCRIPTION

First, the structure of a lens array, that is, an example of an optical molding, and the structures of a lens module and an imaging unit including the lens array will be described.

The lens array includes a disc-shaped substrate part and a plurality of lens parts arranged in the substrate part. The lens parts are made of the same molding material as the substrate part and are molded integrally with the substrate part.

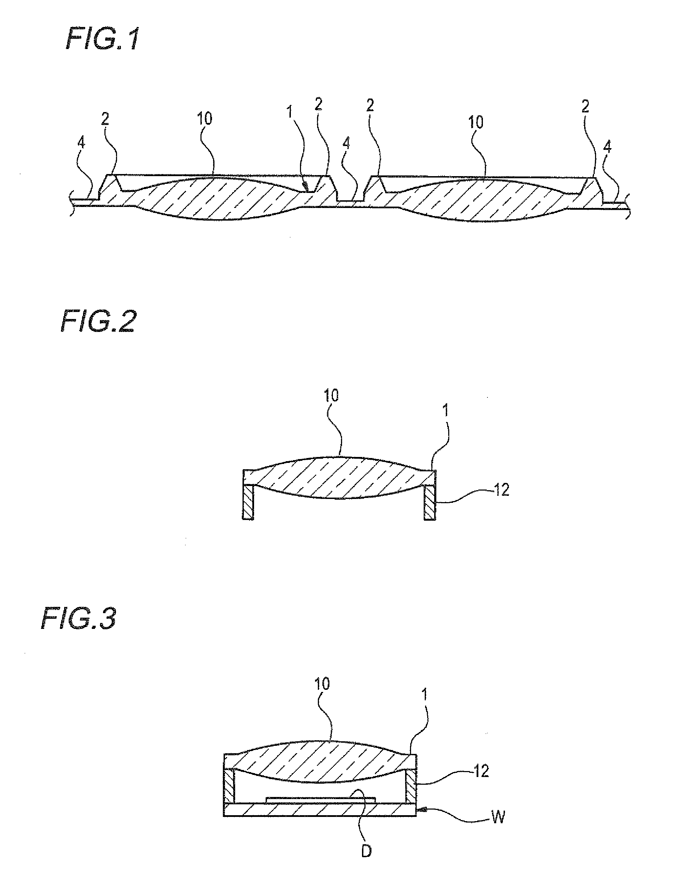

FIG. 1 is a cross-sectional view of the lens array. Each lens part 10 formed on both surfaces of the substrate part 1 is in the shape of a convex lens having convexes protruding from plane portions of the substrate part 1. The shape of each lens part 10 is not particularly specified and may be appropriately modified in accordance with application.

The substrate part 1 has a thin portion 4 having a smaller thickness than the other portion of the substrate part 1. Furthermore, the substrate part 1 has, in its portion excluding each lens part 10, a projection 2 protruding from the surface of the substrate part 1 and having a substantially trapezoidal cross-section. The shape of the projection 2 will be described later.

The lens array is obtained by molding and curing a molding material with a die.

FIG. 2 is a cross-sectional view of a lens module.

The lens module includes a substrate part 1 and a lens part 10 molded integrally with the substrate part 1. The substrate part 1 of the lens module is obtained by cutting a portion corresponding to the projection 2 and the thin portion 4 off from the lens array. Furthermore, the lens module is provided with a spacer 12 on one surface of the substrate part 1.

The spacer 12 is a member for securing a space in placing the lens module on another member.

The lens module is obtained by dicing the substrate part 1 of the lens array of FIG. 1 so as to separate the respective lens parts 10 from one another. The spacer 12 provided on the lens module is precedently formed in a portion on the substrate part 1 to be diced, so as to be separated through the dicing to be provided on the substrate part 1 of each lens module.

FIG. 3 is a cross-sectional view of an imaging unit.

The imaging unit includes the aforementioned lens module and a sensor module. The lens part 10 of the lens module forms an object image on an imaging device D provided on a side of the sensor module. The substrate part 1 of the lens module and a semiconductor substrate W of the sensor module are in substantially the same rectangular shape in a plan view.

The sensor module includes the semiconductor substrate W and the imaging device D provided on the semiconductor substrate W. The semiconductor substrate W is obtained by cutting a wafer made of a semiconductor material such as silicon into a substantially rectangular shape in a plan view. The imaging device D is provided at substantially the center of the semiconductor substrate W. The imaging device D is, for example, a CCD image sensor or a CMOS image sensor. In the sensor module, the imaging device D formed as a chip may be bonded onto a semiconductor substrate having lines and the like formed thereon. Alternatively, the imaging device D may be obtained by forming an electrode, an insulating film, a line and the like through known filming processing, photolithography processing, etching processing, impurity doping processing and the like repeatedly performed on the semiconductor substrate W.

The substrate part 1 of the lens module is stacked on the semiconductor substrate W of the sensor module with the spacer 12 sandwiched therebetween. The spacer 12 of the lens module and the semiconductor substrate W of the sensor module are adhered to each other with, for example, an adhesive. The spacer 12 is designed so that an object image may be formed on the imaging device D of the sensor module by the lens part 10 of the lens module and has a thickness for providing a prescribed distance between the lens part 10 and the imaging device D so as not to allow the lens part 10 to come into contact with the sensor module.

The shape of the spacer 12 provided to the lens module and the imaging unit is not particularly specified but may be appropriately modified as far as the positional relationship of the prescribed distance between the substrate part 1 of the lens module and the semiconductor substrate W of the sensor module may be kept. For example, the spacer 12 may be a member in a grid shape in a plan view of the substrate part I or a plurality of column-shaped members provided around the lens part 10. Alternatively, the spacer 12 may be a france-shaped member surrounding the imaging device D of the sensor module. When the imaging device D is isolated from the outside by thus surrounding it with the frame-shaped spacer 12, light other than light passing through the lens may be blocked so as not to enter the imaging device D. Furthermore, since the imaging device D is thus sealed up, dust may be prevented from adhering to the imaging device D.

The lens module may include a plurality of substrates 1 each having the lens part 10. In this case, the lens module includes the substrate parts 1 successively stacked with the spacers 12 sandwiched therebetween. Furthermore, an imaging unit may be constructed by bonding the sensor module, with the spacer 12 sandwiched therebetween, on the substrate part 1 disposed in the lowermost position of the lens module including a plurality of substrate parts 1 each having the lens part 10.

The imaging unit is mounted through reflow on a circuit substrate not shown to be included in a portable terminal or the like. On the circuit substrate, a paste solder is precedently appropriately printed in a position for mounting the imaging unit, and the imaging unit is placed in the position and welded onto the circuit substrate by subjecting the circuit substrate including the imaging unit to irradiation with infrared or annealing with blow of hot air.

Next, the molding material used for molding the lens array will be described.

As the molding material, a resin having a flow property in the molding and cured through heating or light irradiation after the molding is used. Such a resin may be any of thermosetting resins and resins cured through irradiation with activation energy beams (such as UV or electron beams).

The resin preferably has an appropriate flow property before the molding from the viewpoint of molding characteristics such as a characteristic to transfer the shape of a die in the molding. Specifically, a resin that is in the form of a liquid at room temperature and has viscosity of approximately 1000 through 50000 mPa·s is preferably used.

On the other hand, the resin preferably attains, when cured, heat resistance sufficient for avoiding heat distortion even through the reflow processing. From this point of view, a cured substance of the resin has a glass transition temperature of preferably 200°C or more, more preferably 250°C or more and particularly preferably 300°C or more. In order to provide a resin composition with such high heat resistance, it is necessary to constrain mobility on the level of molecules, and examples of effective methods to be employed for this purpose are as follows: (1) A method in which the crosslink density per unit volume is increased; (2) a method in which a resin with a rigid ring system (i.e., a resin having an alicyclic system such as cyclohexane, norbornane or tetracyclododecane, an aromatic ring system such as benzene or naphthalene, a cardo system such as 9,9'-biphenylfluorene or a spiro system such as spirobiindane, and more specifically, a resin disclosed in, for example, JP-A-9-137043, JP-A-10-67970, JP-A-2003-55316, JP-A-2007-334018 or JP-A-2007-238883) is used; and (3) a method in which a substance with a high Tg such as inorganic particulates is homogeneously dispersed (as described in, for example, JP-A-5-209027 or JP-A-10-298265). A plurality of such methods may be employed in combination, and each method is preferably adjusted as far as other characteristics such as the flow property, a rate of shrinkage and a refractive index characteristic are not spoiled.

From the viewpoint of accuracy in transferring a shape, the resin composition preferably exhibits a small rate of volume shrinkage in the curing reaction. The rate of shrinkage of the resin caused in the curing is preferably 10% or less, more preferably 5% or less and particularly preferably 3% or less.

Examples of the resin composition with a small rate of shrinkage caused in the curing are as follows: (1) A resin composition including a polymeric curing agent (such as a prepolymer) (specific examples of which are described in, for example, JP-A-2001-19740, JP-A-2004-303293 and JP-A-2007-211247; the polymeric curing agent has a number average molecular weight of preferably 200 through 100,000, more preferably 500 through 50,000 and particularly preferably 1,000 through 20,000, and a value calculated by dividing the number average molecular weight by the number of curing reactive groups of the curing agent is preferably 50 through 10,000, more preferably 100 through 5,000 and particularly preferably 200 through 3,000); (2) a resin composition including a nonreactive substance (such as organic/inorganic particulates or a nonreactive resin) (specific examples of which are described in JP-A-6-298883, JP-A-2001-247793 and JP-A-2006-225434); (3) a resin composition including a low profile crosslinking reactive group (for example, a ring opening polymerizable group (such as an epoxy group (described in, for example, JP-A-2004-210932), an oxetanyl group (described in, for example, JP-A-8-134405), an episulfide group (described in, for example, JP-A-2002-105110), and a cyclic carbonate group (described in, for example, JP-A-7-62065)), a thiol/ene curing group (described in, for example, JP-A-2003-20334) or a hydrosilylation curing group (described in, for example, JP-A-2005-15666)); (4) a resin composition including a rigid skeleton resin (such as fluorene, adamantane or isophorone) (described in, for example, JP-A-9-137043); (5) a resin composition including two kinds of monomers having different polymerizable groups and forming an interpenetrating network structure (i.e., so-called IPN structure) (described in, for example, JP-A-2006-131868); and (6) a resin composition including an expansible substance (described in, for example, JP-A-2004-2719 and JP-A-2008-238417), and any of these resin compositions may be suitably used in the present invention. Furthermore, from the viewpoint of optimization of physical properties, some of the aforementioned compositions with a small rate of shrinkage caused in the curing are preferably combined for use (for example, a resin composition including the prepolymer having a ring opening polymerizable group and the particulates is used).

The lens array preferably includes different resins respectively having at least two kinds of, namely, larger and smaller, Abbe numbers.

A resin having a larger Abbe number has an Abbe number (vd) of preferably 50 or more, more preferably 55 or more and particularly preferably 60 or more. The refractive index (nd) of such a resin is preferably 1.52 or more, more preferably 1.55 or more and particularly preferably 1.57 or more. As such a resin, an aliphatic resin is preferably used, and a resin of an alicyclic system (i.e., a resin having a ring system such as cyclohexane, norbornane, adamantane, tricyclodecane or tetracyclododecane, specific examples of which are described in, for example, JP-A-10-152551, JP-A-2002-212500, JP-A-2003-20334, JP-A-2004-210932, JP-A-2006-199790, JP-A-2007-2144, JP-A-2007-284650 and JP-A-2008-105999) is particularly preferred.

A resin having a smaller Abbe number has an Abbe number (vd) of preferably 30 or less, more preferably 25 or less and particularly preferably 20 or less. The refractive index (nd) of such a resin is preferably 1.60 or more, more preferably 1.63 or more and particularly preferably 1.65 or more.

As such a resin, a resin of an aromatic system is preferably used, and for example, a resin having a system of 9,9'-diarylfluorene, naphthalene, benzothiazole, benzotriazole or the like (specific examples of which are described in, for examples, JP-A-60-38411, JP-A-10-67977, JP-A-2002-47335, JP-A-2003-238884, JP-A-2004-83855, JP-A-2005-325331 and JP-A-2007-238883, WO-A-2006/095610 and JP-B-2537540) is preferably used.

For the purpose of increasing the refractive index or adjusting the Abbe number, the resin preferably includes inorganic particulates dispersed in a matrix. Examples of the inorganic particulates are oxide particulates, sulfide particulates, selenide particulates and telluride particulates. More specific examples are particulates of zirconium oxide, titanium oxide, zinc oxide, tin oxide, niobium oxide, cerium oxide, aluminum oxide, lanthanum oxide, yttrium oxide, zinc sulfide and the like.

In particular, in the resin having a larger Abbe number, particulates of lanthanum oxide, aluminum oxide, zirconium oxide or the like are preferably dispersed, and in the resin having a lower Abbe number, particulates of titanium oxide, tin oxide, zirconium oxide or the like are preferably dispersed. One kind of these inorganic particulates may be singly used or two or more kinds of them may be used together. Alternatively, particulates of a composite including a plurality of components may be used.

Furthermore, for various purposes of reducing photocatalytic activity, reducing water absorption and the like, the inorganic particulates may be doped with a different kind of metal, coated with a different metal oxide such as silica or alumina on their surface layers, or subjected to surface modification with a silane coupling agent, a titanate coupling agent, an organic acid (such as a carboxylic acid, a sulfonic acid, a phosphoric acid or a phosphonic acid) or a dispersing agent having an organic acid group. The number average primary particle size of the inorganic particulates may be generally approximately 1 nm through 1000 nm, and when it is too small, the properties of the substance may be changed, and when it is too large, the influence of Rayleigh scattering may be largely exhibited, and therefore, the number average primary particle size is preferably 1 nm through 15 nm, more preferably 2 nm through 10 nm and particularly preferably 3 nm through 7 nm. Moreover, the particle size distribution of the inorganic particulates is preferably as small as possible. In this manner, monodisperse particulates may be variously defined, and for example, a numerically specified range described in JP-A-2006-160992 corresponds to a preferable particle size distribution. At this point, the aforementioned number average primary particle size may be measured with, for example, an X-ray diffractometer (XRD), a transmission electron microscope (TEM) or the like. The refractive index of the inorganic particulates at 22°C and a wavelength of 589 nm is preferably 1.90 through 3.00, more preferably 1.90 through 2.70 and particularly preferably 2.00 through 2.70. The content of the inorganic particulates in the resin is preferably 5 mass% or more, more preferably 10 through 70 mass% and particularly preferably 30 through 60 mass% from the viewpoint of transparency and improvement in the refractive index.

In order to homogeneously disperse the particulates in the resin, the particulates are dispersed preferably by appropriately using, for example, a dispersing agent including a functional group with reactivity with a resin monomer forming the matrix (described in, for example, an embodiment of JP-A-2007-238884), a block copolymer including a hydrophobic chain segment and a hydrophilic chain segment (described in, for example, JP-A-2007-211164), a resin having, in a terminal or a side chain of a high polymer molecule, a functional group capable of forming an arbitrary chemical bond with the inorganic particulate (described in, for example, JP-A2007-238929 and JP-A-2007-238930) or the like.

Furthermore, the resin may appropriately include a known releasing agent such as a silicon-based, a fluorine-based or a long-chain alkyl group-containing compound or an additive such as an antioxidant like hindered phenol or the like.

The resin may include a curing catalyst or an initiator if necessary. A specific example is a compound accelerating a curing reaction (i.e., radical polymerization or ion polymerization) through the function of heat or activation energy beams described in, for example, JP-A-2005-92099 (in paragraphs [0063] through [0070]). The content of such a curing reaction accelerator depends upon the type of catalyst or initiator or the site with curing reactivity and may not be unconditionally specified but, in general, the content is preferably approximately 0.1 through 15 mass% and more preferably approximately 0.5 through 5 mass% on the basis of the total solid content of the curing reactive resin composition.

In fabricating the resin with the aforementioned components appropriately included, in the case where the other components may be dissolved in a liquid low-molecular monomer (i.e., a reactive diluent), there is no need to separately add a solvent. In the other cases, however, the resin is fabricated by dissolving the components in a separately used solvent. The solvent is not particularly specified but may be appropriately selected as far as the components of the resin may be homogeneously dissolved or dispersed therein without precipitating, and specific examples are ketones (such as acetone, methyl ethyl ketone or methyl isobutyl ketone), esters (such as ethyl acetate or butyl acetate), ethers (such as tetrahydrofuran or 1,4-dioxane), alcohols (such as methanol, ethanol, isopropyl alcohol, butanol or ethylene glycol), aromatic carbon hydroxides (such as toluene or xylene) and water. When the resin includes the solvent, the shape of the die is transferred preferably after casting the resin onto a substrate and/or a die member and drying the solvent.

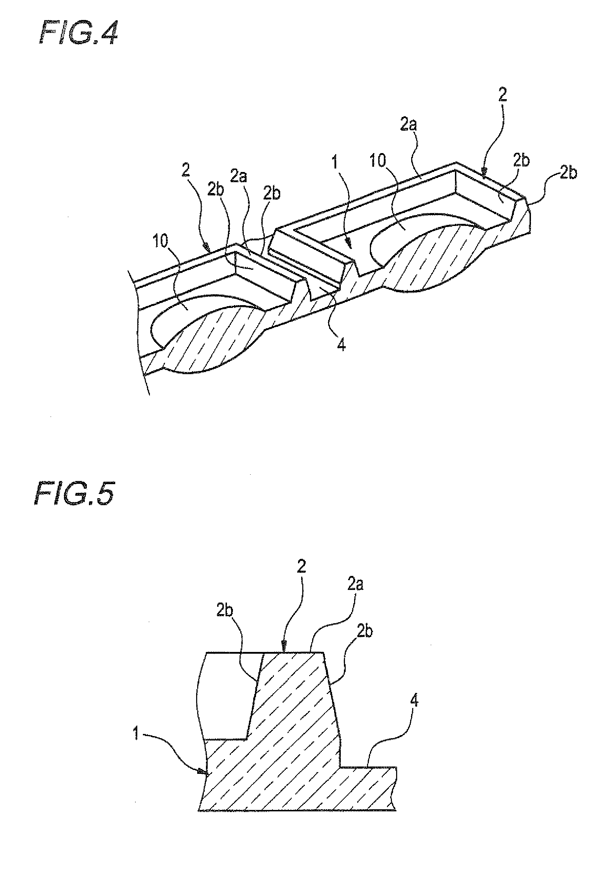

FIG. 4 is a cross-sectional perspective view of a part of the lens array. FIG. 5 is an enlarged cross-sectional view of a part of the lens array.

As illustrated in FIG. 4, the projection 2 is formed on the surface of the substrate part 1 so as to surround each lens part 10 in a rectangular shape in a plan view. The thin portion 4 is formed along the surface of the substrate part 1 between one projection 2 and another projection 2 surrounding another lens part 10. In other words, the projections 2 and the thin portions 4 are formed so as to avoid the lens parts 10 arranged in the substrate part 1.

FIG. 5 is an enlarged cross-sectional view of a part of the lens array.

The projection 2 includes a projecting face 2a substantially parallel to the surface of the substrate part 1 and inclined faces 2b disposed on both sides of the projecting face 2a. Assuming that the projecting face 2a of the projection 2 is the upper side in the cross-sectional view of FIG. 5, the inclined faces 2b are formed so that the upper side may be shorter than a lower side.

Next, a die used for molding the aforementioned lens array and procedures in the molding performed by using the die will be described.

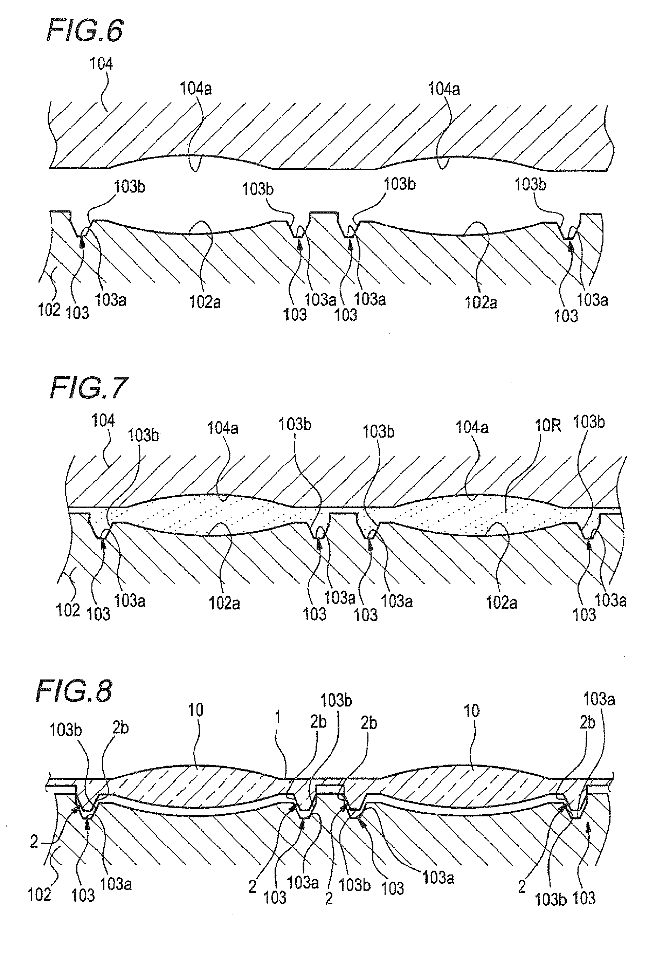

FIG. 6 is a cross-sectional view of the die.

The die includes a pair of die members 102 and 104. It is assumed, in this example, that the die member 102 disposed on the lower side along the vertical direction as illustrated in the drawing corresponds to a lower die and the die member 104 disposed on the upper side corresponds to an upper die.

The pair of die members 102 and 104 have die faces including lens transferring parts 102a and 104a in a shape obtained by inverting the shape of the lens parts of the lens array to be fabricated. In the molding, the die faces of the die members 102 and 104 are in contact with a molding material, so as to mold the molding material by sandwiching it between the die faces. The die face of each of the pair of die members 102 and 104 has an area substantially the same as the area of the lens array to be molded in a plan view of the substrate part 1. Furthermore, the pair of die members 102 and 104 have substantially the same diameter in their peripheral portions and their die faces are both in a perfect circular shape.

The die face of the die member 102 has releasing parts 103 provided in portions excluding the lens transferring parts 102a. Each releasing part 103 is a recess extending along the die face so as to surround each lens transferring part 102a. The releasing part 103 corresponds to a portion for transferring each projection 2 onto the substrate part 1 of the lens array in the molding, namely, an inverted shape of the releasing part 103 corresponds to the shape of the projection 2 of the lens array.

The releasing part 103 includes a bottom 103a and inclined faces 103b formed on both sides of the bottom 103a. These inclined faces 103b are formed in a tapered shape broadening from one bottom 103a toward the die face of the die member 102.

Each releasing part 103 is provided with respect to each lens transferring part 102a, and in a plan view of the die face, a plurality of releasing parts 103 are provided in point symmetrical positions about the center of the die member 102. The die member 104 may also be provided with releasing parts similarly.

FIG. 7 is a cross-sectional view illustrating the molding performed by using the die of FIG. 6.

First, a resin 10R corresponding to the molding material is supplied onto the die face of the die member 102. The resin 10R is applied in a prescribed amount onto the die face by using a dispenser nozzle not shown. After supplying the resin 10R, the resin 10R is sandwiched between the die member 104 and the die member 102 as illustrated in FIG. 7. It is noted that the resin 10R is a thermosetting resin in this example.

With the resin 10R sandwiched between the die member 104 and the die member 102, heat is externally applied to the die, so as to cure the resin 10R. In this manner, a molding of a lens array having surfaces to which inverted shapes of the lens transferring parts 102a and 104a and the releasing parts 103 are transferred may be obtained. After curing, the lens array is released from the die.

FIG. 8 is a cross-sectional view illustrating the release of the lens array from the die.

The die member 104 is removed from the lens array, and the lens array is held on the die member 102.

Internal stress is caused inside the lens array through expansion and contraction occurring in the curing. Therefore, when the lens array is released from the die member 104, it is slightly displaced along the die face of the die member by the internal stress. Through this displacement, detachment is caused between the lens array and the die member 102 in the releasing parts 103, and starting from this detached portion, a gap is formed between the lens array and the die member 102.

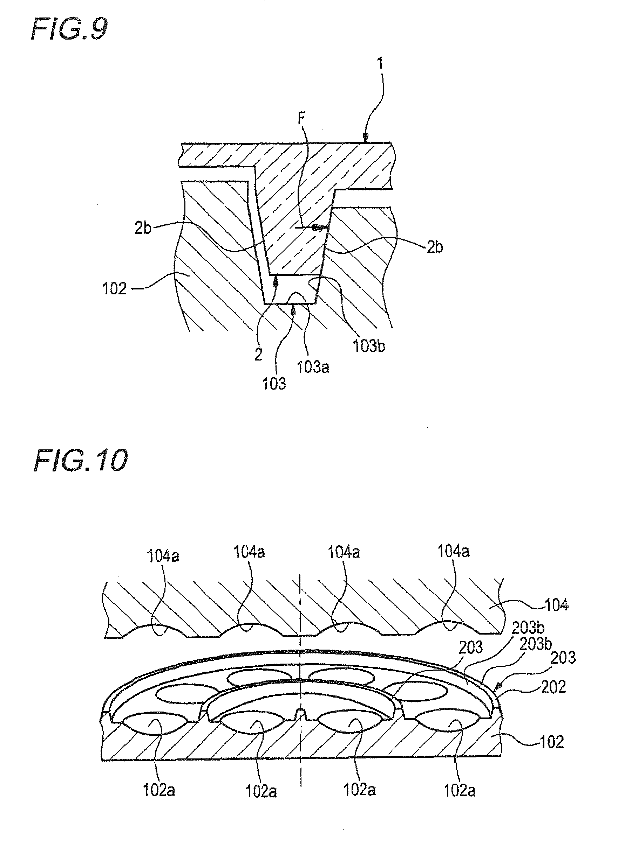

FIG. 9 is an enlarged view of a principal part of FIG. 8.

Owing to the internal stress F of the lens array, a gap is caused between the inclined face 2b (on the right hand side in the drawing in this case) of the projection 2 and the inclined face 103a of the releasing part 103 of the die member 102. The gap thus formed between the die member 102 and the lens array in the releasing part 103 appropriately extends to the other portion between the lens array and the die face, so that a resistance force against the release between the lens array and the die face may be largely reduced, and as a result, the lens array may be released from the die member 102. Not only a gap is formed between the lens array and the die face of the die member 102 but also the lens array rises slightly above the die face of the die member 102, and thus, the lens array is released. Accordingly, the lens array may be released without externally applying a force, and hence, no fault such as distortion is caused in the lens array.

Furthermore, since the substrate part 1 has the thin portion 4 (illustrated in FIG. 1), shrinkage caused through the curing between the lens parts 10 may be suppressed but shrinkage is caused in each lens part 10. Thus, shrinkage of the whole lens array toward its center may be suppressed and variation in the pitch among the lens parts 10 may be suppressed.

Next, another exemplary structure of the die will be described. In the following example, the shape and the arrangement of the releasing parts are modified. The structure other than that of the releasing parts is the same as that described above unless otherwise mentioned, and hence the description is omitted or simplified.

FIG. 10 is a cross-sectional view of a die. FIG. 10 illustrates a part of a pair of die members.

The pair of die members 102 and 104 respectively have lens transferring parts 102a and 104a.

On the die face of the die member 102, a releasing part 203 protruding from the die face and extending along the die face is formed. The releasing part 203 is provided on the die face of the die member 102 in a portion excluding the lens transferring parts 102a. In a plan view of the die face, the releasing part 203 is formed as a plurality of projections disposed at the center of the die member 102 and formed as circles concentric with the center. In a cross-sectional view, the releasing part 203 is in the shape of a trapezoid having an upper side shorter than a lower side. The projection of the releasing part 203 disposed at the center of the die member 102 may be omitted.

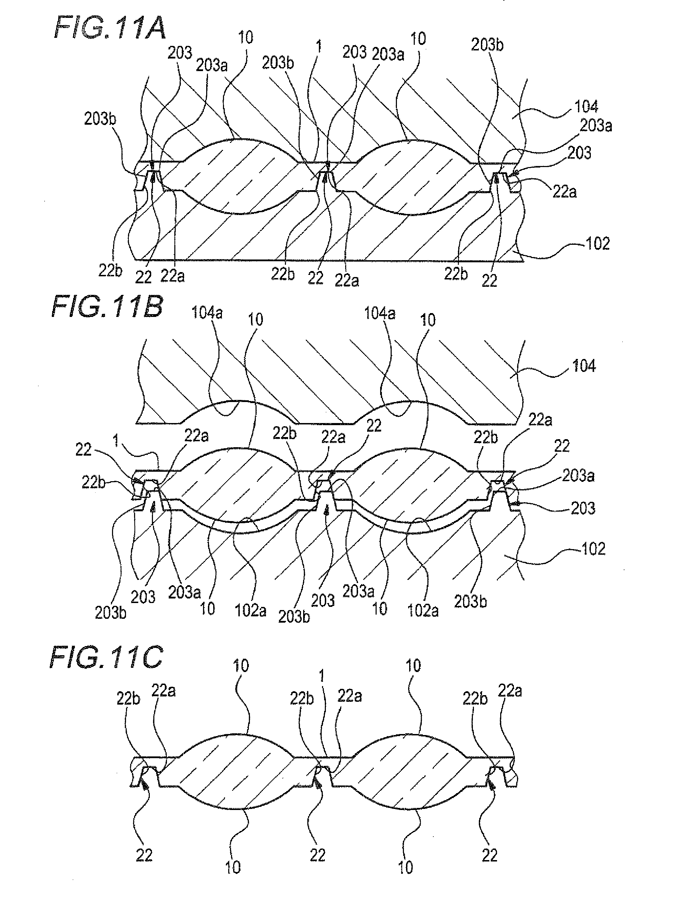

FIGS. 11A through 11C are cross-sectional views illustrating procedures in the molding performed by using the die of FIG. 10.

First, in the same manner as in the aforementioned procedures, a resin corresponding to a molding material is sandwiched between the die members 102 and 104 and the resin is cured. At this point, in accordance with the shape of the releasing part 203 formed on the die face of the die member 102, recesses 22 in the shape obtained by inverting the shape of the releasing part 203 are formed on a surface, disposed on the side of the die member 102, of the substrate part 1 of the lens array (as illustrated in FIG. 11A).

As illustrated in FIG 11A, the releasing part 203 is in a trapezoidal shape in a cross-sectional view and includes an upper face 203a corresponding to the upper base and inclined faces 203b provided on the both sides of the upper face 203a. These inclined faces 203b are formed in a tapered shape broadening from one upper face 203a toward the die face of the die member 102.

As illustrated in FIG. 11B, the die member 104 is removed from the thus molded lens array. Then, since the lens array is released from the die member 104, the lens array may be displaced in accordance with internal stress caused during the curing. Therefore, a gap is formed between the inclined face 202b of the releasing part 203 of the die member 102 and the inclined face 22b of the recess 22 of the lens array, and hence, the lens array may be released from the die.

FIG. 11C illustrates the lens array completely released from the die member 102. In portions on the substrate part 1 of the lens array excluding the lens parts 10, the recesses 22 in the shape obtained by inverting the shape of the releasing part 203 of the die member 102 are formed. Since the recesses 22 are provided in the portions excluding the lens parts 10, they do not affect optical characteristics of the lens parts 10. Furthermore, after molding the lens array, a portion of the substrate part 1 corresponding to each recess 22 may be removed in a separate procedure.

The shape of the releasing part is not limited to the aforementioned shape extending along the die face of the die member but may be in the shape of a circular cone as in the following example:

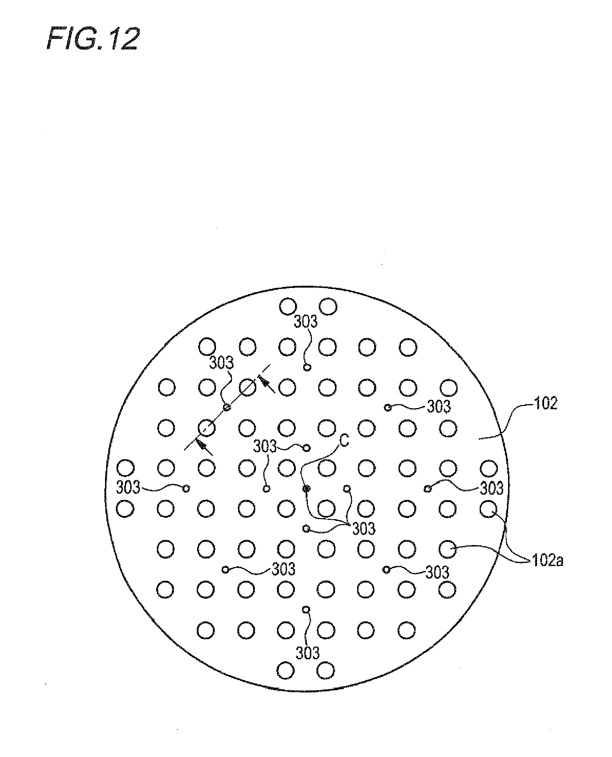

FIG. 12 is a plan view of a die. In this example, a plurality of releasing parts 303 are formed on the die face of a die member 101 in portions excluding lens transferring parts 102a. The plural releasing parts 303 are provided in point symmetrical positions about the center C of the die member 102 in the plan view of the die face of FIG. 12.

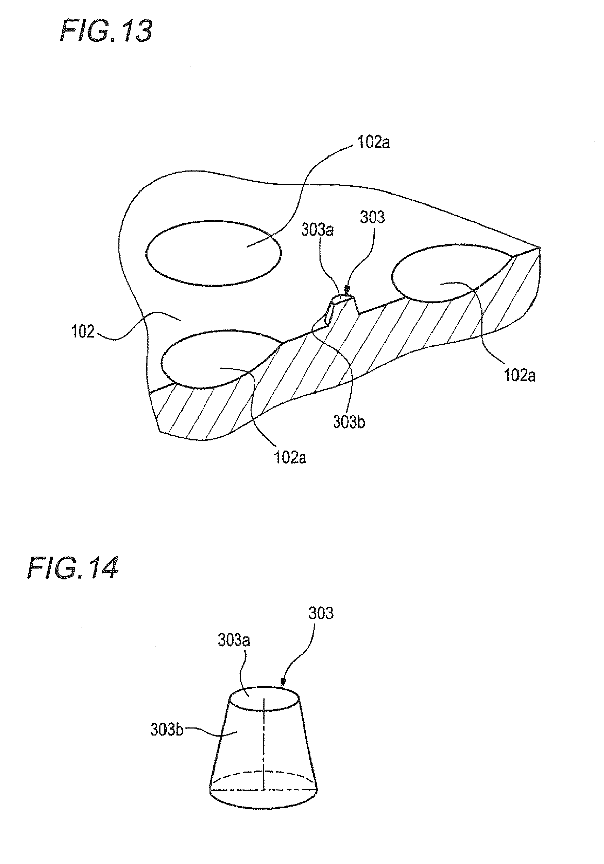

FIG. 13 is a cross-sectional perspective view of the die of FIG, 12 taken from a direction of an arrow of FIG. 12. FIG. 14 is a perspective view of one releasing part.

The releasing part 303 is in the shape of a circular cone protruding from the die face of the die member 102. The releasing part 303 has an upper face 303a and an inclined face 303b disposed around the upper face 303a.

Preferably, one releasing part 303 is provided at the center of the die member 102 with at least three releasing parts 303 disposed on a circumference extending at an equal distance from the center at equal intervals therebetween along the circumferential direction.

In this manner, the releasing part 303 may be in the shape protruding from the die face and extending along the die face as illustrated in FIG. 4 or 10 or may be in the circular cone shape protruding from the die face as illustrated in FIG. 13.

Furthermore, in the case where the releasing part 303 is in the shape extending along the die face, the shape of the releasing part 303 may be intermittent with a notch formed in a portion thereof.

The angle of the inclined face of the releasing part and the height of the releasing part if the releasing part is in the shape of a projection (or the depth of the releasing part if the releasing part is in the shape of a recess) are determined in consideration of the shrinkage characteristic of the molding material to be used.

Although the releasing part is formed on merely one of the pair of die members in the aforementioned exemplary case, the releasing part may be provided on the die faces of both of the pair of die members. In this case, at least one of the shape and the arrangement of the releasing parts is preferably different between the pair of the die members. Thus, a lens array obtained as a molding may be held on precedently determined one of the die members so as to be released from this die member thereafter, and hence, the releasing may be performed always through the same procedures, which is advantageous to the fabrication efficiency.

The present invention is not limited to the aforementioned examples but may be appropriately modified.

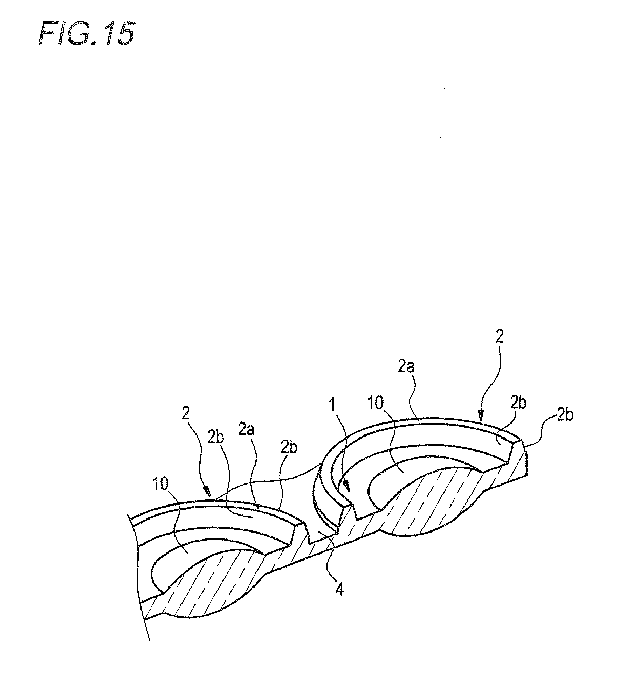

FIG. 15 is a diagram illustrating a modification of the lens array of FIG. 4.

As in the lens array of FIG. 15, each projection 2 may be formed on the surface of the substrate part 1 so as to surround each lens part 10 in a circular shape in a plan view. Also when such a structure is employed, the cross-section of the lens array is the same as that illustrated in FIG. 5.

As discussed above, the exemplary embodiments disclose the following die, molding method and lens array.
(1) A die for use in molding, from a molding material, a lens array including a substrate part and a plurality of lens parts arranged in the substrate part, includes: a die member having a die face to be brought into contact with the molding material. The die member includes: a plurality of lens transferring parts provided on the die face for transferring shapes of the lens parts; and a releasing part formed in at least a part of the die face excluding the lens transferring parts. The releasing part includes an inclined face.
(2) The die according to (1), the releasing part is a recess extending along the die face.
(3) The die according to (1), the releasing part protrudes from the die face and extends along the die face.
(4) The die according to (1), the releasing part is in a circular cone shape protruding from the die face.
(5) The die according to any one of (1) to (4), the releasing part is provided in a plurality of positions point symmetrical about a center of the die member in a plan view of the die face.
(6) The die according to any one of (1) to (5), the die member includes a pair of die members, and at least one of a shape and arrangement of the releasing part is different between the pair of die members.
(7) A molding method for molding, from a molding material, a lens array including a substrate part and a plurality of lens parts arranged in the substrate part, includes: performing molding by pressing a die face having lens transferring parts for transferring shapes of the lens parts against the molding material; curing the molding material; and releasing the lens array from the die member by causing detachment between the lens array and the die member on an inclined face formed in a releasing part formed in at least a part of the die face excluding the lens transferring parts.
(8) The molding method according to (7), the die member includes a pair of die members and at least a shape and arrangement of the releasing part is different between the pair of die members, and the lens array is released successively from one of the pair of die members and the other die member.
(9) A lens array molded by using the die according to any one of (1) to (6), the lens array has, in a portion on the substrate part excluding the lens parts, a recess or a projection in a shape obtained by inverting a shape of the releasing part.

## Claims

1. A die for use in molding, from a molding material, a lens array including a substrate part and a plurality of lens parts arranged in the substrate part, comprising:
a die member having a die face to be brought into contact with the molding material,
wherein the die member comprises:
a plurality of lens transferring parts provided on the die face for transferring shapes of the lens parts; and
a releasing part formed in at least a part of the die face excluding the lens transferring parts, and
the releasing part includes an inclined face.

2. The die according to claim 1,
wherein the releasing part is a recess extending along the die face.

3. The die according to claim 1,
wherein the releasing part protrudes from the die face and extends along the die face.

4. The die according to claim 1,
wherein the releasing part is in a circular cone shape protruding from the die face.

5. The die according to any one of claims 1 to 4,
wherein the releasing part is provided in a plurality of positions point symmetrical about a center of the die member in a plan view of the die face.

6. The die according to any one of claims 1 to 5,
wherein the die member includes a pair of die members, and
at least one of a shape and arrangement of the releasing part is different between the pair of die members.

7. A molding method for molding, from a molding material, a lens array including a substrate part and a plurality of lens parts arranged in the substrate part, comprising:
performing molding by pressing a die face having lens transferring parts for transferring shapes of the lens parts against the molding material;
curing the molding material; and
releasing the lens array from the die member by causing detachment between the lens array and the die member on an inclined face formed in a releasing part formed in at least a part of the die face excluding the lens transferring parts.

8. The molding method according to claim 7,
wherein the die member includes a pair of die members and at least a shape and arrangement of the releasing part is different between the pair of die members, and
the lens array is released successively from one of the pair of die members and the other die member.

9. A lens array molded by using the die according to any one of claims 1 to 6,
the lens array having, in a portion on the substrate part excluding the lens parts, a recess or a projection in a shape obtained by inverting a shape of the releasing part.
